# EUROPEAN PATENT SPECIFICATION

(11) **EP 4 109 027 B1**
(45) Date of publication and mention of the grant of the patent: **07.10.2026**
(21) Application number: 22179568.5
(22) Date of filing: 17.06.2022
(51) Int. Cl.: F28F 9/02, B33Y 80/00, F28F 7/02

(54) **WAVY ADJACENT PASSAGE HEAT EXCHANGER CORE AND MANIFOLD**
WELLENFÖRMIGER WÄRMETAUSCHERKERN MIT ANGRENZENDEM DURCHGANG UND VERTEILER
NOYAU ET COLLECTEUR D'ÉCHANGEUR DE CHALEUR À PASSAGE ADJACENT ONDULÉ

(30) Priority: 23.06.2021 US 202117355808
(43) Date of publication of application: 28.12.2022
(73) Proprietor: Hamilton Sundstrand Corporation, Charlotte, NC 28217-4578 (US)
(72) Inventor: STRANGE, Jeremy M., Windsor, CT 06095 (US); RUIZ, Gabriel, Broad Brook, CT 06016 (US); ZAFFETTI, Mark A., Suffield, CT 06078 (US)
(74) Representative: Dehns

(56) References cited:
- US-A1- 2017 089 643
- US-A1- 2020 309 459
- US-B2- 10 809 007

## Description

### BACKGROUND

Exemplary embodiments pertain to the art of heat exchangers, and more particularly to flow passage configurations of heat exchangers.

Heat exchangers are a technology used throughout the aerospace industry as well as in other industries. These devices are utilized to transfer thermal energy from a relatively hot fluid flow to one or more relatively cold fluid flows and perform numerous essential functions, for example, cooling vehicle electronics and other systems or conditioning an environment to keep astronauts comfortable in space. The presence of multiple fluid loops often requires innovative manifold configurations in order to effectively and efficiently distribute the fluid flows to their respective fluid passages in the heat exchanger, without impairing heat transfer capability.

One typical heat exchanger configuration is a plate-fin heat exchanger, in which components are stacked and brazed to form a completed heat exchanger. Depending on complexity of the construction, such heat exchangers may have hundreds of components which are assembled into the completed heat exchanger. Such assembly can be costly and cumbersome, and the assembly introduces limitations to the configuration of the heat exchanger, such as passage shape and orientation. The art would appreciate improvements to more efficiently manufacture heat exchangers and provide greater efficiency in thermal energy transfer in heat exchangers. US 2020/309459 discloses a heat exchanger having the features of the preamble of claim 1.

### BRIEF DESCRIPTION

A heat exchanger is described herein and defined in claim 1.

Additionally, in this or other embodiments the length of the plurality of lateral passages may increase with increasing distance from the fluidly upstream end of the core section.

Additionally, in this or other embodiments the length of the plurality of lateral passages may vary parabolically.

Additionally, in this or other embodiments the plurality of lateral passages may be defined by the plurality of cutouts in the plurality of first fluid passages.

Additionally, in this or other embodiments the plurality of lateral passages may extend perpendicular to the plurality of first fluid passages.

Additionally, in this or other embodiments the plurality of first fluid passages and the plurality of second fluid passages may extend sinusoidally between the first core end and the second core end.

Additionally, in this or other embodiments the plurality of first fluid passages may be each separated from the plurality of second fluid passages by a passage wall through which the thermal energy is exchanged.

Additionally, in this or other embodiments the first fluid may flow through the core section in a first direction and the second fluid may flow through the core section in a second direction opposite the first direction.

Additionally, in this or other embodiments the heat exchanger may include a plurality of third fluid passages through which a third fluid is flowed to exchange thermal energy with the second fluid.

Additionally, in this or other embodiments each second fluid passage of the plurality of second fluid passages may be located between a first fluid passage of the plurality of first fluid passages and a third fluid passage of the plurality of third fluid passages.

Additionally, in this or other embodiments the plurality of first fluid passages, the plurality of second fluid passages and the plurality of third fluid passages may extend parallelly between the first core end and the second core end.

A method of forming a heat exchanger is also described herein and defined in claim 10.

Additionally, in this or other embodiments the length of the plurality of lateral passages may increase with increasing distance from the fluidly upstream end of the core section.

Additionally, in this or other embodiments the length of the plurality of lateral passages may vary parabolically.

Additionally, in this or other embodiments the plurality of lateral passages may be defined by a plurality of cutouts in the plurality of first fluid passages.

Additionally, in this or other embodiments the plurality of lateral passages may extend perpendicular to the plurality of first fluid passages.

Additionally, in this or other embodiments the non-linear path may be sinusoidal.

Additionally, in this or other embodiments the repeating cross-sectional portion may further include a third fluid passage for conveyance of a third fluid.

Additionally, in this or other embodiments the heat exchanger may be formed by one or more additive manufacturing processes.

### BRIEF DESCRIPTION OF THE DRAWINGS

The following descriptions should not be considered limiting in any way. With reference to the accompanying drawings, like elements are numbered alike:
FIG. 1 is a schematic view of an embodiment of a heat exchanger
FIG. 2 is a schematic illustration of an embodiment of a core section of a heat exchanger;
FIG. 3 is a schematic illustration of a manifold arrangement of a heat exchanger;
FIG. 4a is an illustration of an embodiment of a manifold passage of a heat exchanger;
FIG. 4b is an illustration of another embodiment of a manifold passage of a heat exchanger; and
FIG. 5 is an illustration of a method of forming a heat exchanger.

### DETAILED DESCRIPTION

A detailed description of one or more embodiments of the disclosed apparatus and method are presented herein by way of exemplification and not limitation with reference to the Figures.

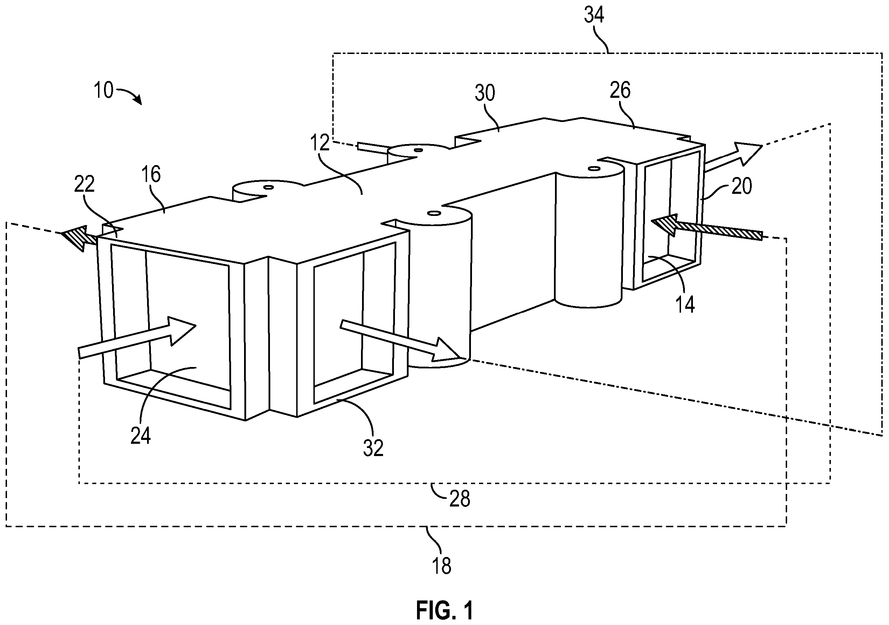

Referring now to FIG. 1, illustrated is a schematic view of an embodiment of a heat exchanger 10. In the embodiment illustrated, the heat exchanger 10 is a three-loop heat exchanger 10, meaning three separate fluid flows are circulated therethrough and exchange thermal energy in a core 12 of the heat exchanger 10. The heat exchanger 10 includes a first loop inlet 14 and a first loop outlet 16 for a first fluid loop 18. In some embodiments, the first loop inlet 14 is located at a first heat exchanger end 20 of the heat exchanger 10 and the first loop outlet 16 is located at a second heat exchanger end 22 opposite the first heat exchanger end 20. The heat exchanger 10 further includes a second loop inlet 24 and a second loop outlet 26 of a second fluid loop 28, and a third loop inlet 30 and a third loop outlet 32 of a third fluid loop 34. Each of the first fluid loop 18, the second fluid loop 28 and the third fluid loop 34 have a respective first fluid, second fluid and third fluid circulating therethrough. In some embodiments, the first fluid, the second fluid and the third fluid are all different fluids, while in other embodiments two or more of the first fluid, the second fluid and the third fluid may be the same fluid. While three fluid loops are illustrated and described herein with heat exchanger 10, one skilled in the art will readily appreciate that a three-loop configuration is merely exemplary, and that the present disclosure may be readily applied to heat exchanger 10 configurations accommodating two, four or more fluid loops.

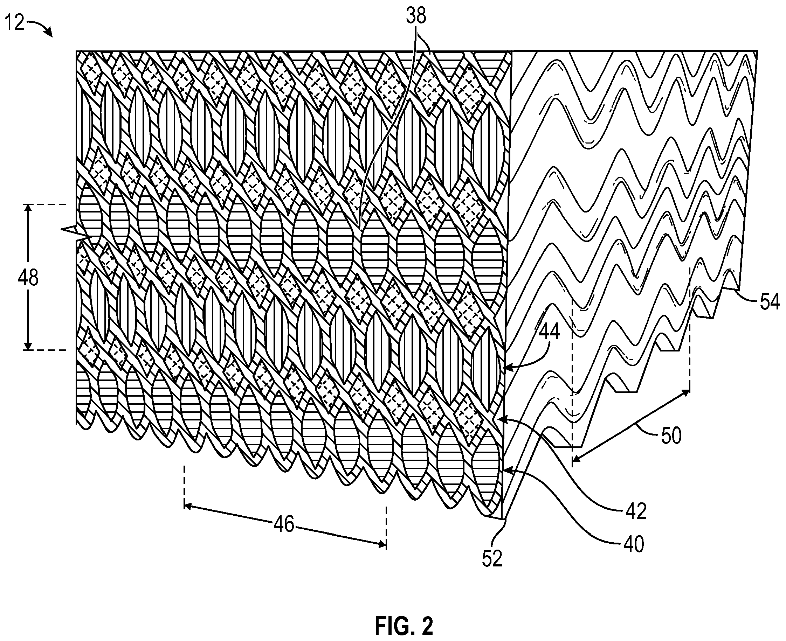

Referring now to FIG. 2, illustrated is a cross-sectional view of a core 12 of the heat exchanger 10. The core 12 is the portion of the heat exchanger where the thermal energy transfer occurs, after the fluids enter the heat exchanger through their respective fluid loop inlets. The core 12 includes a plurality of passages separated by passage walls 38. The plurality of passages includes a plurality of first fluid passages 40, a plurality of second fluid passages 42 and a plurality of third fluid passages 44. In some embodiments, the first fluid passages 40, second fluid passages 42 and the third fluid passages 44 are arranged in rows that extend, for example, in a first direction 46, such as across a width of the core 12. The rows are stacked or arranged along a second direction 48, such as a height of the core 12. In some embodiments, such as shown, the fluid passages are polygonal, such as rhombus-shaped to increase the amount of surface contact between adjacent fluid passages and between adjacent rows of fluid passages. In some embodiments, each of the first fluid passages 40 and the third fluid passages 44 contain a relatively cold first fluid and third fluid, respectively, while the second fluid passages 42 contain a relatively hot second fluid. The rows of fluid passages are arranged or stacked such that each row of second fluid passages 42 is located between a row of first fluid passages 40 and a row of third fluid passages 44. One skilled in the art, however, will readily appreciate that other arrangements of rows may be utilized.

The first fluid passages 40, the second fluid passages 42 and the third fluid passages 44 all extend along a third direction 50, such as a length of the core 12. The fluid passages 40, 42, 44 extend non-linearly along the third direction 50 between a first core end 52 and a second core end 54. In some embodiments, the fluid passages 40, 42, 44 extend along a sinusoidal path or other tortuous path generally along the third direction between the first core end 52 and the second core end 54. Further, in some embodiments, the fluid passages 40, 42, 44 extend parallelly along the sinusoidal or tortuous path. The use of the sinusoidal or tortuous path increases the primary heat exchange surface area along a given length of the core 12 and increases turbulence in the flow of the first fluid, second fluid and third fluid thereby improving the efficiency of the thermal energy exchange.

In some embodiments, the heat exchanger 10 is a counterflow heat exchanger in which one or more of the first fluid, second fluid or third fluid flows through the core 12 in a first direction from the first core end 52 to the second core end 54 and the other fluids flow in a second direction opposite the first direction. In other embodiments, however, the heat exchanger 10 is a parallel flow heat exchanger in which all of the first fluid, the second fluid and the third fluid flow through the core 12 in the same direction.

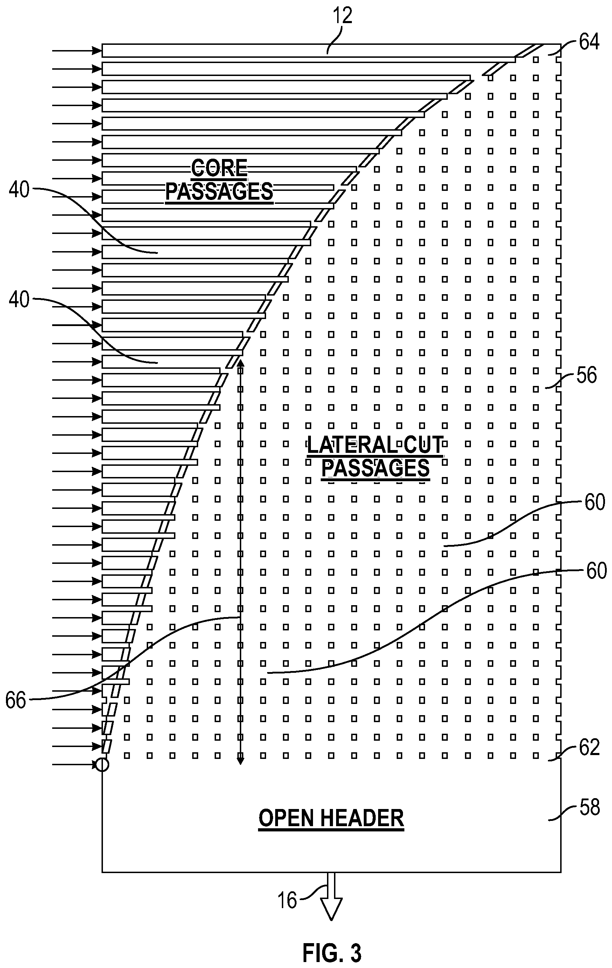

Referring now to FIG. 3, in some embodiments one or more of the fluid loop inlets 14, 24, 30 shown in FIG. 1 are located along the side of the heat exchanger 10 such that the respective fluid is directed into the core 12 in a direction non-parallel to the fluid passages 40, 42, 44 indicated in FIG. 2. In some embodiments, the fluid is directed into the core 12 substantially perpendicular to the fluid passages 40, 42, 44. Similarly, in some embodiments, one or more of the fluid loop outlets 16, 26, 32 shown in FIG. 1 are located along the side of the heat exchanger 10 such that the respective fluid is directed from the core 12 in a direction non-parallel to the fluid passages 40,42, 44. In some embodiments, the fluid is directed from the core 12 substantially perpendicular to the fluid passages 40, 42, 44. In one embodiment, such as shown in FIG. 1, fluid loop outlets 16 and 32 are non-parallel to the fluid passages while outlet 26 is parallel to the fluid passages.

To accomplish this, a manifold 56 is connected to the core 12. For example, regarding the first fluid loop 18 indicated in FIG. 1, the first loop outlet 16 includes manifold 56 which collects the first fluid flow from the plurality of first fluid passages 40 and directs the first fluid flow to a header 58. The manifold 56 includes a plurality of lateral passages 60 extending across the first fluid passages 40. The lateral passages 60 each have a first passage end 62 located at the header 58, and a second passage end 64 opposite the first passage end 62 defining a passage depth 66. The lateral passages 60 have variable passage depth 66, such that lateral passages 60 located further upstream relative to the flow direction through the first fluid passages 40 have a relatively short passage depth 66 compared to the passage depth 66 of those lateral passages 60 located further downstream relative to the flow direction through the first fluid passages 40. In some embodiments, the variable passage depth 66 is configured such that the second passage ends 64 of the plurality of lateral passages 60 define a parabolic shape.

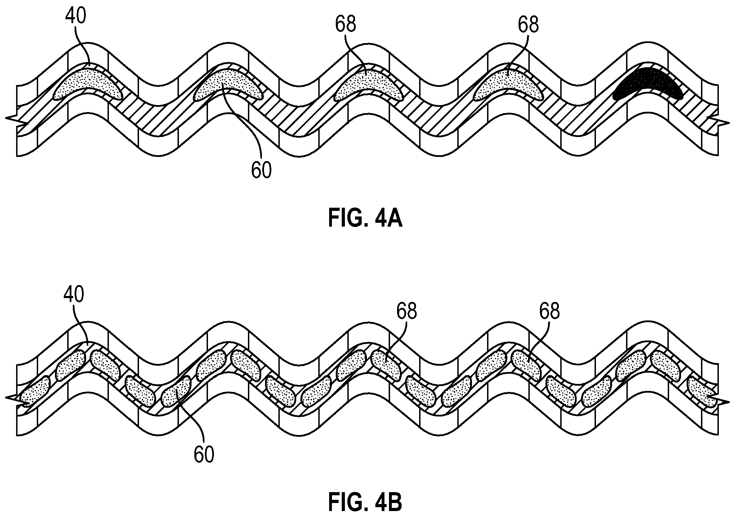

Referring to FIG. 4a and 4b, the lateral passages 60 are defined by cutouts 68 through the first fluid passages 40. The cutouts 68 are sized and configured to allow the lateral flow from the first fluid passages 40, while avoiding or not encroaching on the second fluid passages 42 and the third fluid passages 44. While the description herein relates to lateral passages 60 at the first fluid outlet 16, one skilled in the art will readily appreciate that the present disclosure may also readily be applied at the fluid loop inlets 14, 24, 30 and other fluid loop outlets 26 and 32.

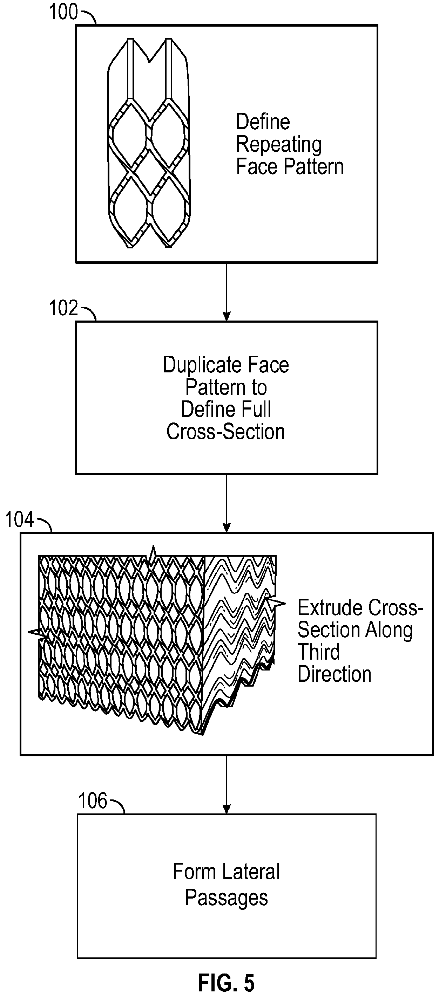

Referring now to FIG. 5, to form the heat exchanger 10, a repeating face pattern of the core 12 is defined at step 100. The pattern defines the arrangements and relative sizes and cross-sectional shapes of the fluid passages 40, 42, 44 by defining the passage walls 38. The face pattern 56 is duplicated as needed to define a full cross-sectional shape of the core 12 at step 102. At step 104, the cross-sectional shape of the core 12 is extruded generally along the third direction 50, and specifically along the desired sine wave path or other tortuous path direction to fully define the core 12. In some embodiments, the core 12 is formed by one or more additive manufacturing processes. At step 106, the lateral passages 60 are formed into the core section 12, in some embodiments by one or more additive manufacturing processes.

The cutouts 68, formed as part of the processes that form the lateral passages 60 at step 106, provide seamless side entry and side exit paths without introducing complex geometric features that would complicate the manufacturing process. Further, the cutouts 68 do not significantly reduce thermal energy transfer, compared to other manifolding concepts. The passage depth 66 of each lateral passage 60 may be tailored to optimize pressure drop and flow distribution., and the quantity and shape of the lateral passages 60 may be tailored to minimize pressure drop.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A heat exchanger, comprising:
a first fluid inlet (14);
a first fluid outlet (16);
a second fluid inlet (24);
a second fluid outlet (26);
a core section (12), including:
a plurality of first fluid passages (40) through which a first fluid is flowed from the first fluid inlet to the first fluid outlet;
a plurality of second fluid passages (42) through which a second fluid is flowed from the second fluid inlet to the second fluid outlet to exchange thermal energy with the first fluid;
wherein the plurality of first fluid passages (40) and the plurality of second fluid passages (42) extend non-linearly along a length of the plurality of first fluid passages and the plurality of second fluid passages between a first core end and a second core end opposite the first core end;
a manifold (56) operably connected to the plurality of first fluid passages, the manifold including a plurality of lateral passages intersecting the plurality of first fluid passages, the plurality of lateral passages varying in length depending on distance from a fluidly upstream end of the core section;
and wherein the plurality of lateral passages is fluidly connected to the first fluid inlet such that the first fluid is conveyed to the plurality of first fluid passages via the plurality of lateral passages, the plurality of lateral passages configured to direct the first fluid into the plurality of first fluid passages in a direction perpendicular to the first fluid passages,
**characterized in that**
the plurality of lateral passages are defined by a plurality of cutouts in a passage wall of the plurality of first fluid passages.

2. The heat exchanger of claim 1, wherein the length of the plurality of lateral passages increases with increasing distance from the fluidly upstream end of the core section.

3. The heat exchanger of claim 1 or 2, wherein the length of the plurality of lateral passages varies parabolically.

4. The heat exchanger of any preceding claim, wherein the plurality of lateral passages are defined by the plurality of cutouts in the plurality of first fluid passages.

5. The heat exchanger of any preceding claim, wherein the plurality of lateral passages extend perpendicular to the plurality of first fluid passages.

6. The heat exchanger of any preceding claim, wherein the plurality of first fluid passages and the plurality of second fluid passages extend sinusoidally between the first core end and the second core end, or wherein the plurality of first fluid passages are each separated from the plurality of second fluid passages by a passage wall through which the thermal energy is exchanged.

7. The heat exchanger of any preceding claim, wherein the first fluid flows through the core section in a first direction and the second fluid flows through the core section in a second direction opposite the first direction.

8. The heat exchanger of any preceding claim, further comprising a plurality of third fluid passages through which a third fluid is flowed to exchange thermal energy with the second fluid.

9. The heat exchanger of claim 8, wherein each second fluid passage of the plurality of second fluid passages is located between a first fluid passage of the plurality of first fluid passages and a third fluid passage of the plurality of third fluid passages, or wherein the plurality of first fluid passages, the plurality of second fluid passages and the plurality of third fluid passages extend parallelly between the first core end and the second core end.

10. A method of forming a heat exchanger, comprising:
defining a repeating cross-sectional portion of a core section, including at least a first fluid passage for conveyance of a first fluid and a second fluid passage for conveyance of a second fluid;
repeating the cross-sectional portion along a first direction and a second direction to define a full cross-section of the core section of the heat exchanger;
extruding the full cross-section along a non-linear path between a first core section end and a second core section end; and
forming a plurality of lateral passages intersecting the plurality of first fluid passages, the plurality of lateral passages varying in length depending on distance from a fluidly upstream end of the core section;
and wherein the plurality of lateral passages is fluidly connected to the first fluid inlet such that the first fluid is conveyed to the plurality of first fluid passages via the plurality of lateral passages, the plurality of lateral passages configured to direct the first fluid into the plurality of first fluid passages in a direction perpendicular to the first fluid passages,
**characterized in that**
the plurality of lateral passages are defined by a plurality of cutouts in a passage wall of the plurality of first fluid passages.

11. The method of claim 10, wherein the length of the plurality of lateral passages increases with increasing distance from the fluidly upstream end of the core section, or wherein the length of the plurality of lateral passages varies parabolically.

12. The method of claim 10 or 11, wherein the plurality of lateral passages are defined by the plurality of cutouts in the plurality of first fluid passages, or wherein the plurality of lateral passages extend perpendicular to the plurality of first fluid passages.

13. The method of any of claims 10 to 12, wherein the non-linear path is sinusoidal.

14. The method of any of claims 10 to 13, wherein the repeating cross-sectional portion further includes a third fluid passage for conveyance of a third fluid.

15. The method of any of claims 10 to 14, wherein the heat exchanger is formed by one or more additive manufacturing processes.

## Patentansprüche

1. Wärmetauscher, umfassend:
einen ersten Fluideinlass (14);
einen ersten Fluidauslass (16);
einen zweiten Fluideinlass (24);
einen zweiten Fluidauslass (26);
einen Kernabschnitt (12), einschließlich:
einer Vielzahl von ersten Fluiddurchgängen (40), durch die ein erstes Fluid von dem ersten Fluideinlass zu dem ersten Fluidauslass geströmt wird;
einer Vielzahl von zweiten Fluiddurchgängen (42), durch die ein zweites Fluid von dem zweiten Fluideinlass zu dem zweiten Fluidauslass geströmt wird, um Wärmeenergie mit dem ersten Fluid auszutauschen;
wobei sich die Vielzahl von ersten Fluiddurchgängen (40) und die Vielzahl von zweiten Fluiddurchgängen (42) nichtlinear entlang einer Länge der Vielzahl von ersten Fluiddurchgängen und der Vielzahl von zweiten Fluiddurchgängen zwischen einem ersten Kernende und einem dem ersten Kernende entgegengesetzten zweiten Kernende erstrecken;
eines Verteilers (56), der wirkmäßig mit der Vielzahl von ersten Fluiddurchgängen verbunden ist, wobei der Verteiler eine Vielzahl von seitlichen Durchgängen einschließt, die die Vielzahl von ersten Fluiddurchgängen schneiden, wobei die Vielzahl von seitlichen Durchgängen abhängig von dem Abstand von einem fluidisch stromaufwärtigen Ende des Kernabschnitts in der Länge variiert;
und wobei die Vielzahl von seitlichen Durchgängen fluidisch mit dem ersten Fluideinlass verbunden ist, sodass das erste Fluid über die Vielzahl von seitlichen Durchgängen zu der Vielzahl von ersten Fluiddurchgängen befördert wird, wobei die Vielzahl von seitlichen Durchgängen konfiguriert ist, um das erste Fluid in einer Richtung senkrecht zu den ersten Fluiddurchgängen in die Vielzahl von ersten Fluiddurchgängen zu leiten,
**dadurch gekennzeichnet, dass**
die Vielzahl von seitlichen Durchgängen durch eine Vielzahl von Ausschnitten in einer Durchgangswand der Vielzahl von ersten Fluiddurchgängen definiert ist.

2. Wärmetauscher nach Anspruch 1, wobei die Länge der Vielzahl von seitlichen Durchgängen mit zunehmendem Abstand von dem fluidisch stromaufwärtigen Ende des Kernabschnitts zunimmt.

3. Wärmetauscher nach Anspruch 1 oder 2, wobei die Länge der Vielzahl von seitlichen Durchgängen parabolisch variiert.

4. Wärmetauscher nach einem der vorhergehenden Ansprüche, wobei die Vielzahl von seitlichen Durchgängen durch die Vielzahl von Ausschnitten in der Vielzahl von ersten Fluiddurchgängen definiert ist.

5. Wärmetauscher nach einem der vorhergehenden Ansprüche, wobei sich die Vielzahl von seitlichen Durchgängen senkrecht zu der Vielzahl von ersten Fluiddurchgängen erstreckt.

6. Wärmetauscher nach einem der vorhergehenden Ansprüche, wobei sich die Vielzahl von ersten Fluiddurchgängen und die Vielzahl von zweiten Fluiddurchgängen sinusförmig zwischen dem ersten Kernende und dem zweiten Kernende erstrecken, oder wobei die Vielzahl von ersten Fluiddurchgängen jeweils von der Vielzahl von zweiten Fluiddurchgängen durch eine Durchgangswand getrennt ist, durch die die Wärmeenergie ausgetauscht wird.

7. Wärmetauscher nach einem der vorhergehenden Ansprüche, wobei das erste Fluid in einer ersten Richtung durch den Kernabschnitt strömt und das zweite Fluid in einer zu der ersten Richtung entgegengesetzten zweiten Richtung durch den Kernabschnitt strömt.

8. Wärmetauscher nach einem der vorhergehenden Ansprüche, ferner umfassend eine Vielzahl von dritten Fluiddurchgängen, durch die ein drittes Fluid geströmt wird, um Wärmeenergie mit dem zweiten Fluid auszutauschen.

9. Wärmetauscher nach Anspruch 8, wobei sich jeder zweite Fluiddurchgang der Vielzahl von zweiten Fluiddurchgängen zwischen einem ersten Fluiddurchgang der Vielzahl von ersten Fluiddurchgängen und einem dritten Fluiddurchgang der Vielzahl von dritten Fluiddurchgängen befindet, oder wobei sich die Vielzahl von ersten Fluiddurchgängen, die Vielzahl von zweiten Fluiddurchgängen und die Vielzahl von dritten Fluiddurchgängen parallel zwischen dem ersten Kernende und dem zweiten Kernende erstrecken.

10. Verfahren zum Bilden eines Wärmetauschers, umfassend:
Definieren eines sich wiederholenden Querschnittsabschnitts eines Kernabschnitts, einschließlich mindestens eines ersten Fluiddurchgangs zur Beförderung eines ersten Fluids und eines zweiten Fluiddurchgangs zur Beförderung eines zweiten Fluids;
Wiederholen des Querschnittsabschnitts entlang einer ersten Richtung und einer zweiten Richtung, um einen vollen Querschnitt des Kernabschnitts des Wärmetauschers zu definieren;
Extrudieren des vollen Querschnitts entlang eines nichtlinearen Pfades zwischen einem ersten Kernabschnittsende und einem zweiten Kernabschnittsende; und
Bilden einer Vielzahl von seitlichen Durchgängen, die die Vielzahl von ersten Fluiddurchgängen schneiden, wobei die Vielzahl von seitlichen Durchgängen abhängig von dem Abstand von einem fluidisch stromaufwärtigen Ende des Kernabschnitts in der Länge variiert;
und wobei die Vielzahl von seitlichen Durchgängen fluidisch mit dem ersten Fluideinlass verbunden ist, sodass das erste Fluid über die Vielzahl von seitlichen Durchgängen zu der Vielzahl von ersten Fluiddurchgängen befördert wird, wobei die Vielzahl von seitlichen Durchgängen konfiguriert ist, um das erste Fluid in einer Richtung senkrecht zu den ersten Fluiddurchgängen in die Vielzahl von ersten Fluiddurchgängen zu leiten,
**dadurch gekennzeichnet, dass**
die Vielzahl von seitlichen Durchgängen durch eine Vielzahl von Ausschnitten in einer Durchgangswand der Vielzahl von ersten Fluiddurchgängen definiert ist.

11. Verfahren nach Anspruch 10, wobei die Länge der Vielzahl von seitlichen Durchgängen mit zunehmendem Abstand von dem fluidisch stromaufwärtigen Ende des Kernabschnitts zunimmt, oder wobei die Länge der Vielzahl von seitlichen Durchgängen parabolisch variiert.

12. Verfahren nach Anspruch 10 oder 11, wobei die Vielzahl von seitlichen Durchgängen durch die Vielzahl von Ausschnitten in der Vielzahl von ersten Fluiddurchgängen definiert ist, oder wobei sich die Vielzahl von seitlichen Durchgängen senkrecht zu der Vielzahl von ersten Fluiddurchgängen erstreckt.

13. Verfahren nach einem der Ansprüche 10 bis 12, wobei der nichtlineare Pfad sinusförmig ist.

14. Verfahren nach einem der Ansprüche 10 bis 13, wobei der sich wiederholende Querschnittsabschnitt ferner einen dritten Fluiddurchgang zur Beförderung eines dritten Fluids einschließt.

15. Verfahren nach einem der Ansprüche 10 bis 14, wobei der Wärmetauscher durch ein oder mehrere additive Fertigungsverfahren gebildet wird.

## Revendications

1. Échangeur de chaleur comprenant :
une première entrée de fluide (14) ;
une sortie de fluide (16) ;
une deuxième entrée de fluide (24) ;
une deuxième sortie de fluide (26) ;
une section centrale (12), incluant :
une pluralité de premiers passages de fluide (40) à travers lesquels un premier fluide s'écoule de la première entrée de fluide à la première sortie de fluide ;
une pluralité de deuxièmes passages de fluide (42) à travers lesquels un deuxième fluide s'écoule de la deuxième entrée de fluide à la deuxième sortie de fluide pour échanger de l'énergie thermique avec le premier fluide ;
dans lequel la pluralité de premiers passages de fluide (40) et la pluralité de deuxièmes passages de fluide (42) s'étendent de manière non linéaire sur une longueur de la pluralité de premiers passages de fluide et de la pluralité de deuxièmes passages de fluide entre une première extrémité de section centrale et une deuxième extrémité de section centrale opposée à la première extrémité de section centrale ;
un collecteur (56) relié de manière fonctionnelle à la pluralité de premiers passages de fluide, le collecteur comprenant une pluralité de passages latéraux intersectant la pluralité de premiers passages de fluide, la pluralité de passages latéraux variant en longueur en fonction de la distance à partir d'une extrémité fluidiquement en amont de la section centrale ;
et dans lequel la pluralité de passages latéraux est reliée fluidiquement à la première entrée de fluide de sorte que le premier fluide soit acheminé vers la pluralité de premiers passages de fluide via la pluralité de passages latéraux, la pluralité de passages latéraux étant configurée pour diriger le premier fluide vers la pluralité de premiers passages de fluide dans une direction perpendiculaire à celle des premiers passages de fluide,
**caractérisé en ce que**
la pluralité de passages latéraux est définie par une pluralité de découpes dans une paroi de passage de la pluralité de premiers passages de fluide.

2. Échangeur de chaleur selon la revendication 1, dans lequel la longueur de la pluralité de passages latéraux augmente avec une distance croissante de l'extrémité fluidiquement en amont de la section centrale.

3. Échangeur de chaleur selon la revendication 1 ou 2, dans lequel la longueur de la pluralité de passages latéraux varie de façon parabolique.

4. Échangeur de chaleur selon l'une quelconque des revendications précédentes, dans lequel la pluralité de passages latéraux est définie par la pluralité de découpes dans la pluralité de premiers passages de fluide.

5. Échangeur de chaleur selon l'une quelconque des revendications précédentes, dans lequel la pluralité de passages latéraux s'étend perpendiculairement à la pluralité de premiers passages de fluide.

6. Échangeur de chaleur selon l'une quelconque des revendications précédentes, dans lequel la pluralité de premiers passages de fluide et la pluralité de deuxièmes passages de fluide s'étendent de manière sinusoïdale entre la première extrémité de section centrale et la deuxième extrémité de section centrale, ou dans lequel la pluralité de premiers passages de fluide sont séparés chacun de la pluralité de deuxièmes passages de fluide par une paroi de passage à travers laquelle l'énergie thermique est échangée.

7. Échangeur de chaleur selon l'une quelconque des revendications précédentes, dans lequel le premier fluide s'écoule à travers la section centrale dans une première direction et le deuxième fluide s'écoule à travers la section centrale dans une deuxième direction opposée à la première direction.

8. Échangeur de chaleur selon l'une quelconque des revendications précédentes, comprenant en outre une pluralité de troisièmes passages de fluide à travers lesquels un troisième fluide s'écoule pour échanger de l'énergie thermique avec le deuxième fluide.

9. Échangeur de chaleur selon la revendication 8, dans lequel chaque deuxième passage de fluide de la pluralité de deuxièmes passages de fluide est situé entre un premier passage de fluide de la pluralité de premiers passages de fluide et un troisième passage de fluide de la pluralité de troisièmes passages de fluide, ou dans lequel la pluralité de premiers passages de fluide, la pluralité de deuxièmes passages de fluide et la pluralité de troisièmes passages de fluide s'étendent parallèlement entre la première extrémité de section centrale et la deuxième extrémité de section centrale.

10. Procédé de formation d'un échangeur de chaleur, comprenant :
la définition d'une portion de section transversale répétitive d'une section centrale, comprenant au moins un premier passage de fluide pour le transport d'un premier fluide et un deuxième passage de fluide pour le transport d'un deuxième fluide ;
la répétition de la portion de section transversale le long d'une première direction et d'une deuxième direction pour définir une section transversale complète de la section centrale de l'échangeur de chaleur ;
l'extrusion de la section transversale complète le long d'un chemin non linéaire entre une première extrémité de section centrale et une deuxième extrémité de section centrale ; et
la formation d'une pluralité de passages latéraux intersectant la pluralité de premiers passages de fluide, la pluralité de passages latéraux variant en longueur en fonction de la distance d'une extrémité fluidiquement en amont de la section centrale ;
et dans lequel la pluralité de passages latéraux est reliée fluidiquement à la première entrée de fluide de sorte que le premier fluide soit acheminé vers la pluralité de premiers passages de fluide via la pluralité de passages latéraux, la pluralité de passages latéraux étant configurée pour diriger le premier fluide vers la pluralité de premiers passages de fluide dans une direction perpendiculaire à celle des premiers passages de fluide,
**caractérisé en ce que**
la pluralité de passages latéraux est définie par une pluralité de découpes dans une paroi de passage de la pluralité de premiers passages de fluide.

11. Procédé selon la revendication 10, dans lequel la longueur de la pluralité de passages latéraux augmente avec une distance croissante de l'extrémité fluidiquement en amont fluide de la section centrale, ou dans lequel la longueur de la pluralité de passages latéraux varie de manière parabolique.

12. Procédé selon la revendication 10 ou 11, dans lequel la pluralité de passages latéraux est définie par la pluralité de découpes dans la pluralité de premiers passages de fluide, ou dans lequel la pluralité de passages latéraux s'étend perpendiculairement à la pluralité de premiers passages de fluide.

13. Procédé selon l'une quelconque des revendications 10 à 12, dans lequel le chemin non linéaire est sinusoïdal.

14. Procédé selon l'une quelconque des revendications 10 à 13, dans lequel la portion de section transversale répétitive comprend en outre un troisième passage de fluide pour le transport d'un troisième fluide.

15. Procédé selon l'une quelconque des revendications 10 à 14, dans lequel l'échangeur de chaleur est formé par un ou plusieurs processus de fabrication additive.
